# EUROPEAN PATENT APPLICATION

(11) **EP 2 426 964 A1**
(43) Date of publication of application: **07.03.2012**
(21) Application number: 10769603.1
(22) Date of filing: 12.04.2010
(51) Int. Cl.: H04W 8/02, H04W 48/18, H04W 88/06

(54) **MOBILE COMMUNICATION METHOD, MOBILE COMMUNICATION SYSTEM, DELIVERY SERVER, SUBSCRIBER INFORMATION MANAGEMENT SERVER, AND SESSION MANAGEMENT SERVER**

(30) Priority: 27.04.2009 JP 2009108304
(71) Applicant: NTT DOCOMO, INC., Chiyoda-ku Tokyo 100-6150 (JP)
(72) Inventor: MORITA,Takashi, Tokyo 100-6150 (JP); TANAKA, Itsuma, Tokyo 100-6150 (JP)
(74) Representative: HOFFMANN EITLE
(86) International application number: PCT/JP2010/056523
(87) International publication number: WO 2010/125904

(57) **Abstract**

A radio base station according to the present invention comprising : a mobile communication method for delivering an incoming signal for voice communication to a mobile station on standby in any of a plurality of classifications of radio access networks, the method comprising, a step in which when a session management server managing a mobile station and the classification of the radio access network corresponding to each session between a delivery server and a radio access network device detects a change to the classification of the radio access network of the standby target of the mobile station, a subscriber information management server managing the subscriber information of each mobile station is notified of this intention, a step in which the subscriber information management server notifies the delivery server of the classification of the radio access network of the standby target of the mobile station as notified by the session management server and a step in which the delivery server manages the classification of the radio access network of the standby target of the mobile station as notified by the subscriber information management server, and a step in which the delivery server delivers the incoming signal for voice communication based on the location information for VoIP of the mobile station managed by itself, the CS communication routing number of the mobile station, and the classification of the radio access network of the standby target of the mobile station, depending on the received incoming signal for voice communication addressed to the mobile station.

## Description

### TECHNICAL FIELD

The present invention relates to a mobile communication method, a mobile communication system, a delivery server, a subscriber information management server, and a session management server.

### BACKGROUND ART

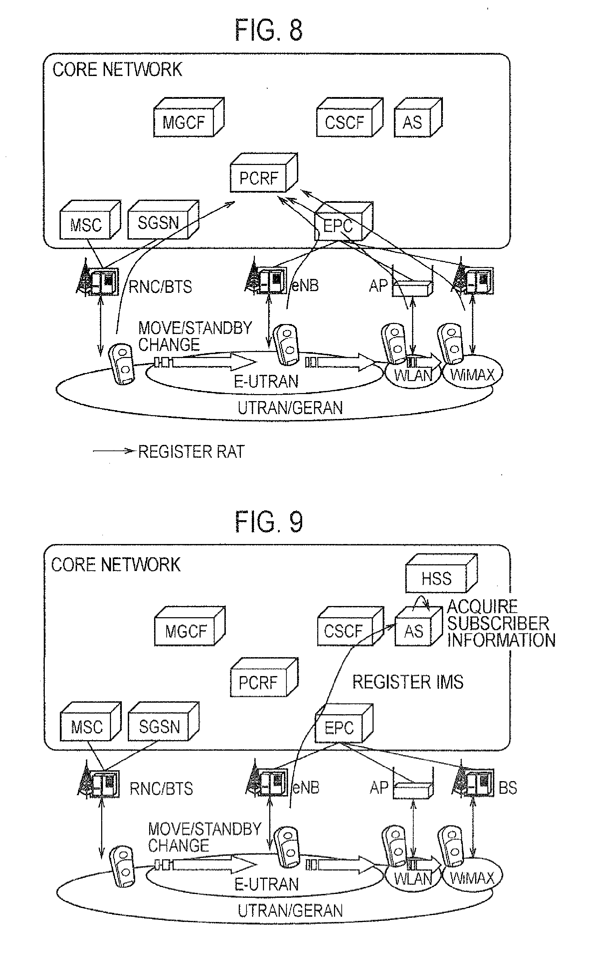

A description will be provided with reference to Fig. 8 and to Fig. 9 for a method for delivering incoming signals for voice communication in a mobile communication system as defined by the current 3GPP.

As illustrated in Fig. 8, in such a mobile communication system, when there is a change to the radio access technology (RAT) of the standby target, that is, when the session between the core network device and the radio access network device has been switched, a mobile station UE#1 is configured to register the classification of the new standby target RAT of the mobile station UE#1 for the server PCRF (Policy and Charging Rules Function).

The location information of the mobile station UE#1 is also configured to be registered for the server HSS (Home Subscriber Server).

Further, as illustrated in Fig. 9, in an RAT environment providing an IMS (IP Multimedia Core Network Subsystem), the server AS (Application Server) is configured to acquire location information for VoIP (Voice over IP) by means of an IMS registering procedure of the mobile station UE#1, acquire subscriber information of the mobile station UE#1 from the server HSS (Home Subscriber Server), and retain the CS communication routing number of the mobile station UE#1.

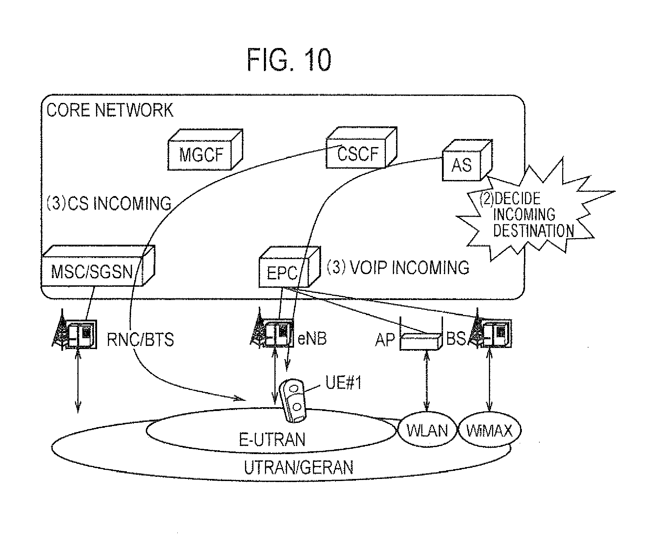

As illustrated in Fig. 10, the server AS decides in (2) the delivery destination of an incoming signal for voice communication addressed to the mobile station UE#1 based on a priority ranking of RAT classifications set by a communication operator, in order to deliver to the delivery destination that has been decided the incoming signal for voice communication addressed to the mobile station UE#1 in (3).

Specifically, the server AS, when deciding that a mobile switching center MSC/SGSN housing a "UTRAN/GERAN" is the delivery destination, sends an incoming signal for CS communication to the mobile switching center MSC, and when deciding that a node EPC housing an "E-UTRAN" is the delivery destination, sends an incoming signal for VoIP (Voice over IP) communication to the node EPC.

### SUMMARY OF THE INVENTION

### PROBLEMS TO BE SOLVED BY THE INVENTION

However, the mobile communication system defined by the current 3GPP as described above has been problematic in that because the server AS decides the delivery destination of the incoming signal for voice communication addressed to the mobile station UE#1 based on the priority ranking of RAT classifications set by the communication operator regardless of the standby target RAT of the mobile station UE#1, and the mobile station UE#1 is unable to standby in a plurality of RATs, then when an incoming signal for voice communication is delivered to an RAT for which the mobile station UE#1 is not on standby, there is a large delay time, due to the retransmission of the incoming signal for voice communication, until the mobile station UE#1 receives the incoming signal for voice communication.

Furthermore, such a mobile communication system has been problematic in that the mobile station UE#1 performs a lower-quality CS communication when the server AS has sent an incoming signal for CS communication to the mobile station UE#1 on standby in the E-UTRAN, despite the ability to also perform VoIP communication.

Therefore, the present invention is intended to overcome problems described above, and an object thereof is to provide a mobile communication method, a mobile communication system, a delivery server, a subscriber information management server, and a session management server capable of initiating high-quality voice communication in a short period of time.

### MEANS FOR SOLVING THE PROBLEMS

The first feature of the present invention is summarized in that a mobile communication method for delivering an incoming signal for voice communication to a mobile station on standby in any of a plurality of classifications of radio access networks, the method comprising, a step in which when a session management server managing a mobile station and the classification of the radio access network corresponding to each session between a delivery server and a radio access network device detects a change to the classification of the radio access network of the standby target of the mobile station, a subscriber information management server managing the subscriber information of each mobile station is notified of this intention, a step in which the subscriber information management server notifies the delivery server of the classification of the radio access network of the standby target of the mobile station as notified by the session management server and a step in which the delivery server manages the classification of the radio access network of the standby target of the mobile station as notified by the subscriber information management server, and a step in which the delivery server delivers the incoming signal for voice communication based on the location information for VoIP of the mobile station managed by itself, the CS communication routing number of the mobile station, and the classification of the radio access network of the standby target of the mobile station, depending on the received incoming signal for voice communication addressed to the mobile station.

The second feature of the present invention is summarized in that a mobile communication system configured to deliver an incoming signal for voice communication to a mobile station on standby in any of a plurality of classifications of radio access networks, the system comprising, a delivery server which is a subscriber information management server configured to manage the subscriber information of each mobile station and a session management server configured to manage the mobile station and the classification of the radio access network corresponding to each session between the delivery server and a radio access network device, the session management server includes a function configured such that when a change is detected to the classification of the radio access network of the standby target of the mobile station, the subscriber information management server is notified of this intention, the subscriber information management server includes, a function configured such that the delivery server is notified of the classification of the radio access network of the standby target of the mobile station as notified by the session management server, the delivery server includes a function configured to manage the classification of the radio access network of the standby target of the mobile station as notified by the subscriber information management server; and a function configured such that the incoming signal for voice communication is delivered based on the location information for VoIP of the mobile station managed by itself, the CS communication routing number of the mobile station, and the classification of the radio access network of the standby target of the mobile station, depending on the received incoming signal for voice communication addressed to the mobile station.

The third feature of the present invention is summarized in that a delivery server to be used in a mobile communication system configured to deliver an incoming signal for voice communication to a mobile station on standby in any of a plurality of classifications of radio access networks, the server comprising, a function configured to manage the classification of the radio access network of the standby target of the mobile station as notified by the subscriber information management server managing the subscriber information of each mobile station and a function configured to deliver the incoming signal for voice communication based on the location information for VoIP of the mobile station managed by itself, the CS communication routing number of the mobile station, and the classification of the radio access network of the standby target of the mobile station, depending on the received incoming signal for voice communication addressed to the mobile station.

The fourth feature of the present invention is summarized in that a subscriber information management server to be used in a mobile communication system configured to deliver an incoming signal for voice communication to a mobile station on standby in any of a plurality of classifications of radio access networks, the server comprising, a function configured to manage the subscriber information of each mobile station and a function configured to notify the delivery server that is to deliver the incoming signal for voice communication of the classification of the radio access network of the standby target of the mobile station as notified by a session management server managing the mobile station and the classification of the radio access network corresponding to each session between the delivery server and a radio access network device.

The fifth feature of the present invention is summarized in that a session management server to be used in a mobile communication system configured to deliver an incoming signal for voice communication to a mobile station on standby in any of a plurality of classifications of radio access networks, the server comprising, a function configured to manage a mobile station and the classification of a radio access network corresponding to each session between a delivery server delivering the incoming signal for voice communication and a radio access network device and a function configured such that when a change is detected to the classification of the radio access network of the standby target of the mobile station, a subscriber information management server managing the subscriber information of each mobile station is notified of this intention.

### EFFECTS OF THE INVENTION

As has been described above, according to the present invention, it is possible to provide a mobile communication method, a mobile communication system, a delivery server, a subscriber information management server, and a session management server capable of initiating high-quality voice communication in a short period of time.

### BRIEF DESCRIPTION OF THE DRAWINGS

[Fig. 1] Fig. 1 is a diagram showing the entire configuration of the mobile communication system according to a first embodiment of the present invention.
[Fig. 2] Fig. 2 is functional block diagram of each server AS, HSS, and PCRF in the mobile communication system according to the first embodiment of the present invention.
[Fig. 3] Fig. 3 is a diagram illustrating one example of the information being managed by the server PCRF according to the first embodiment of the present invention.
[Fig. 4] Fig. 4 is a sequence diagram showing the operation of the mobile communication system according to the first embodiment of the present invention.
[Fig. 5] Fig. 5 is a sequence diagram illustrating the operation of the mobile communication system according to the first embodiment of the present invention.
[Fig. 6] Fig. 6 is a diagram to describe the operation of the mobile communication system according to the first embodiment of the present invention.
[Fig. 7] Fig. 7 is a diagram to describe the operation of the mobile communication system according to the first embodiment of the present invention.
[Fig. 8] Fig. 8 is a diagram to describe the operation of a conventional mobile communication system.
[Fig. 9] Fig. 9 is a diagram to describe the operation of a conventional mobile communication system.
[Fig. 10] Fig. 10 is a diagram to describe the operation of a conventional mobile communication system.

### BEST MODES FOR CARRYING OUT THE INVENTION

### (Mobile communication system according to first embodiment of the present invention)

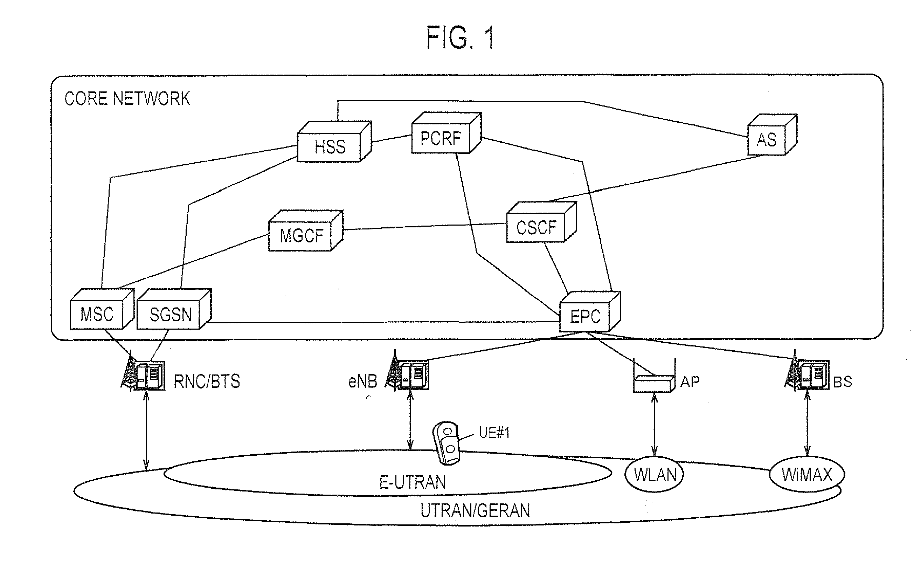

As illustrated in Fig. 1, in the mobile communication system according to this embodiment, UTRAN (Universal Terrestrial Radio Access Network)/GERAN (GSM Edge Radio Access Network), E-UTRAN (Evolved-UTRAN), WLAN (Wireless LAN), and WiMAX (Worldwide Interoperability for Microwave Access, registered trademark) are connected to a core network as a plurality of classifications of RATs.

In the mobile communication system according to this embodiment, a server MGCF (Media Gateway Control Function), a server CSCF, a server AS, a server HSS, and a server PCRF are provided within the core network.

Further, in the mobile communication system according to this embodiment, a mobile switching center MSC/SGSN and a node EPC are provided within the core network as core network devices.

The mobile communication system according to this embodiment further includes a radio network control station RNC and a radio base station BTS, which are radio access network devices for the UTRAN/GERAN; a radio base station eNB, which is a radio access network device for the E-UTRAN; an access point AP, which is a radio access network device for the WLAN; and a radio base station BS, which is a radio access network device for the WiMAX.

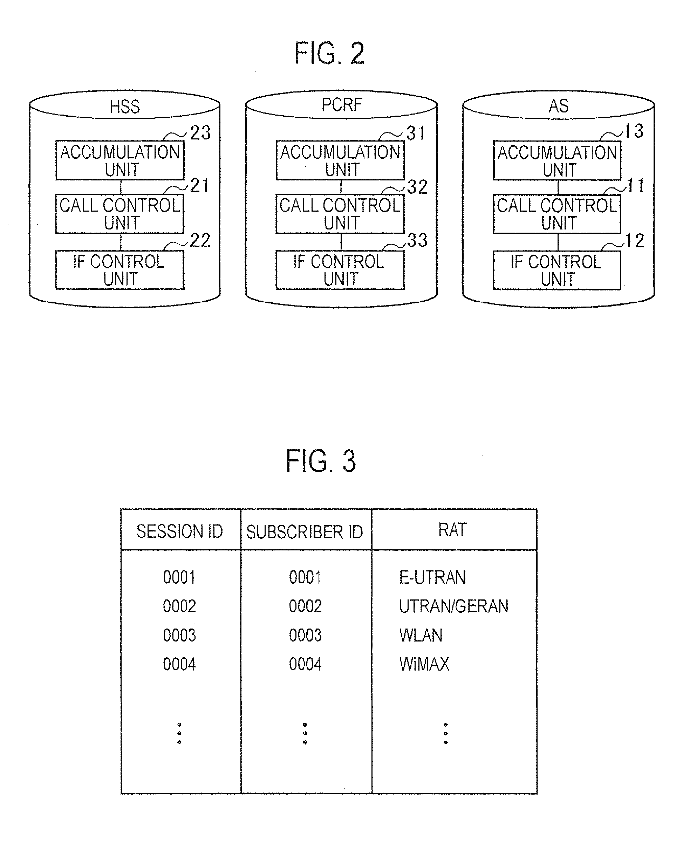

The server AS, as illustrated in Fig. 2, includes a call control unit 11, an IF (Interface) control unit 12, and an accumulation unit 13.

The IF control unit 12 is configured to act as an interface with the server HSS.

The accumulation unit 13 includes a function configured to manage location information for VoIP of each mobile station UE as notified by the IMS registering procedure, the CS communication routing number of each mobile station UE registered as network information, and the RAT classification of the standby target of each mobile station UE as notified by the server HSS.

The call control unit 11 includes a function configured to decide, in reaction to an incoming signal for voice communication addressed to the mobile station UE#1 received from the server CSCF, the delivery destination of the incoming signal for voice communication (for example, the mobile switching center MSC or a session) based on the location information for VoIP of the mobile station UE#1, which is managed by itself, on the CS communication routing number of the mobile station UE#1, and on the RAT classifications of the standby target of the mobile station UE#1, and also so as to deliver the incoming signal for voice communication to the delivery destination that has been decided upon.

Herein the "voice communication" in this embodiment is to also include communication executed through audio signals and video signals such as TV conference communication.

For example, the call control unit 11 is configured such that when the RAT classification of the standby target of the mobile station UE#1 is "UTRAN/GERAN", an incoming signal for CS communication is delivered to the mobile switching center MSC identified by the CS communication routing number "CSRN" of the mobile station UE#1 via a C-plane path.

The call control unit 11 is also configured such that when the RAT classification of the standby target of the mobile station UE#1 is "E-UTRAN", "WLAN", or "WiMAX", an incoming signal for VoIP communication is delivered over the U-plane path (session) identified by the location information "IMS-ID" of the mobile station UE#1. In such a case, the call control unit 11 does not need to be aware of the radio access network device of the delivery destination of the incoming signal for VoIP communication.

Note that the call control unit 11 may be configured such that even when the RAT classification of the standby target of the mobile station UE#1 is "UTRAN/GERAN", an incoming signal for VoIP communication is delivered over the U-plane path (session) identified by the location information "IMS-ID" of the mobile station UE#1 when a U-plane path (session) in the IMS can be set in the "UTRAN/GERAN".

The server HSS also includes a call control unit 21, an IF control unit 22, and an accumulation unit 23.

The IF control unit 22 is configured to act as an interface with the server AS and the server PCRF.

The accumulation unit 23 is configured to manage the RAT classification of the standby target of the mobile station UE#1 as notified by the server PCRF.

The call control unit 21 is configured such that whenever there is a change to the subscriber information of the mobile station UE being managed in the accumulation unit 23, the subscriber information of the mobile station UE is sent to the server AS.

The call control unit 21 also includes a function configured to notify the server AS of the location information of the mobile station UE#1 and of the RAT classification of the standby target of the mobile station UE#1 as notified by the server PCRF, via the IF control unit 22, with a specified timing, for example, a timing in which notification of the RAT classification of the standby target of the mobile station UE#1 has been given by the server PCRF.

The server PCRF further includes an accumulation unit 31, a call control unit 32, and an IF control unit 33.

The IF control unit 33 is configured to act as an interface with the server HSS.

The call control unit 32, as illustrated in Fig. 3, is configured to manage the mobile station UE and the RAT classification and the like corresponding to each session between the server AS and the radio access network device. Note that the accumulation unit 31 may be further configured to manage the QoS (Quality of Service) and charging rules and the like corresponding to each session.

The call control unit 32 includes a function configured such that, whenever a change to the RAT classification of the standby target of each mobile station UE has been detected, then a notification of this intention is given to the server HSS via the IF control unit 33.

### (Operation of the mobile communication system according to first embodiment of the present invention)

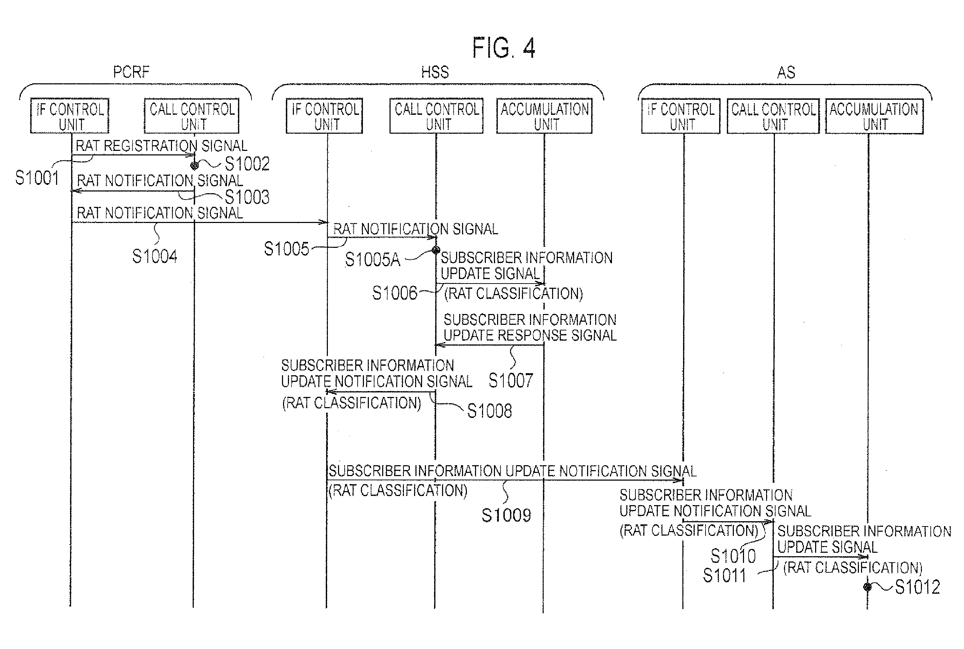

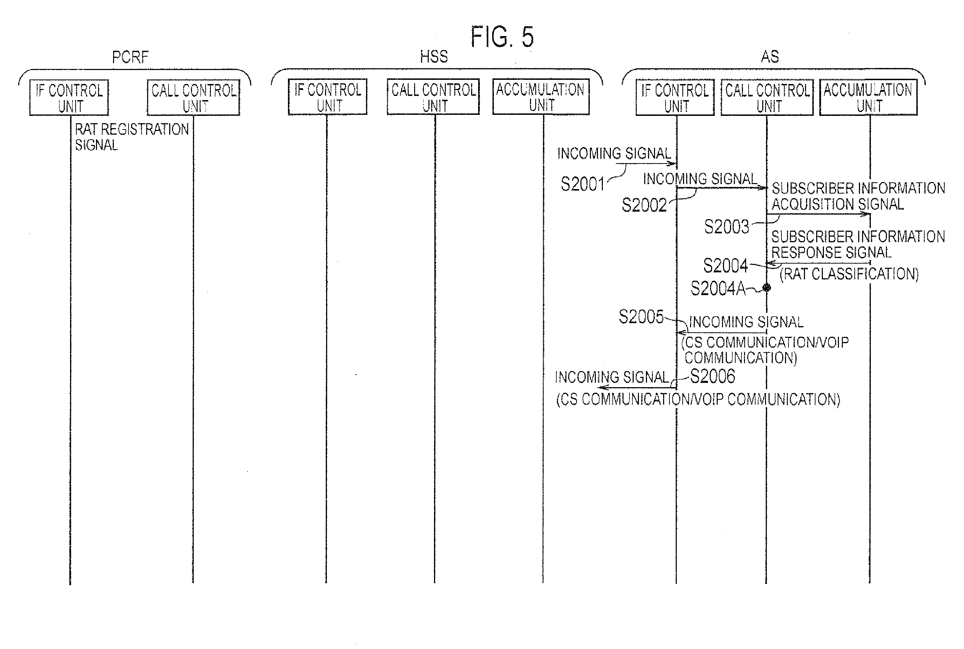

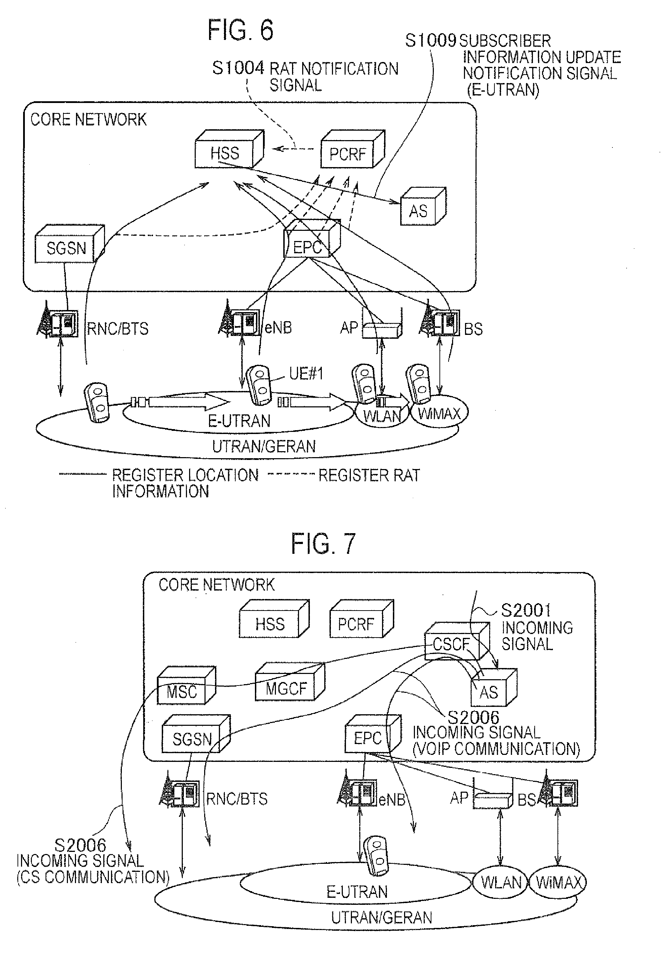

A description will be given with reference to Fig. 4 to Fig. 7 for the operation of the mobile communication system according to a first embodiment of the present invention.

In step S1001, the IF control unit 33 of the server PCRF, upon receiving a session change notification signal for the mobile station UE#1 from the node EPC, sends an RAT registration signal for changing the RAT classification of the standby target of the mobile station UE#1 to the call control unit 32, such that the call control unit 32, in step S1002, changes the RAT classification of the standby target of the mobile station UE#1, and in step S1003 sends an RAT notification signal for giving notification of this intention to the IF control unit 33, such that in step S1004 the IF control unit 33 sends the RAT notification signal to the IF control unit 22 of the server HSS.

In step S1005, the IF control unit 22 sends the RAT notification signal to the call control unit 21, and the call control unit 21, upon detecting that an RAT notification signal has been received in step S1005A, sends a subscriber information update signal for updating the RAT classification of the standby target of the mobile station UE#1 to the accumulation unit 23 in step S1006, such that the accumulation unit 23, in step S1007, updates the RAT classification of the standby target of the mobile station UE#1, and in step S1008, and sends a subscriber information update notification signal containing the RAT classification of the standby target of the mobile station UE#1 to the IF control unit 22.

In step S1009, the IF control unit 22 sends the subscriber information update notification signal to the IF control unit 12 of the server AS, and in step S1010, the IF control unit 12 sends the subscriber information update notification signal to the call control unit 11.

In step S1011, the call control unit 11 sends a subscriber information update signal for updating the RAT classification of the standby target of the mobile station UE#1 to the accumulation unit 13, and in step S1012 the accumulation unit 13 updates the RAT classification of the standby target of the mobile station UE#1.

Thereafter, the IF control unit 12 of the server AS, upon receiving an incoming signal for voice communication addressed to the mobile station UE#1 from the server CSCF in step S2001, sends the incoming signal for voice communication to the call control unit 11 in step S2002.

The call control unit 11 sends a subscriber information acquisition request signal to the accumulation unit 13 in step S2003, and receives from the accumulation unit 13 in step S2004 a subscriber information response signal containing the location information of the mobile station UE#1 and the RAT classification of the standby target of the mobile station UE#1.

The call control unit 11 decides in step S2004A the deliver destination of an incoming signal for voice communication addressed to the mobile station UE#1 (the mobile switching center MSC or the session) based on the location information of the mobile station UE#1 and the RAT classification of the standby target of the mobile station UE#1 contained in the received subscriber information response signal, and then in step S2005 delivers an incoming signal for CS communication or an incoming signal for VoIP communication to the IF control unit 12, such that in step S2006 the IF control unit 12 delivers the incoming signal for CS communication or the incoming signal for VoIP communication to the delivery destination.

### (Operation and effect of the mobile communication system according to first embodiment of the present invention)

According to the mobile communication system according to the first embodiment of the present invention, it is possible to avoid the situation in which an incoming signal for voice communication is transferred elsewhere other than the RAT of the standby target of the mobile station UE#1, because the deliver destination of the incoming signal for voice communication is decided based on the location information for VoIP of the mobile station UE#1, the CS communication routing number of the mobile station UE#1, and the RAT classification of the standby target of the mobile station UE#1 as notified by the server HSS, thus making it possible to reduce the delivery delay of incoming signals for voice communication.

Further, according to the mobile communication system according to the first embodiment of the present invention, it is possible to avoid the situation in which, due to the act of the server AS sending an incoming signal for CS communication to the mobile station UE#1 on standby in the E-UTRAN, the mobile station UE#1 ends up performing lower-quality CS communication despite the ability to also perform VoIP communication.

The characteristics of this embodiment as described above may be represented as follows.

A first characteristic of this embodiment is summarized in that a mobile communication method for delivering an incoming signal for voice communication to a mobile station UE#1 on standby in any of a plurality of classifications of RATs (radio access network) includes the step in which a server PCRF (session management server) managing a mobile station UE and the RAT classification (classification of the radio access network) corresponding to each session between a server AS (delivery server) and a radio access network device, upon detecting a change to the RAT classification of the standby target of the mobile station UE#1, notifies a server HSS (subscriber information management server) managing the subscriber information of each mobile station UE of this intention; the step in which the server HSS notifies the server AS of the RAT classification of the standby target of the mobile station UE#1 as notified by the session management server PCRF; the step in which the server AS manages the RAT classification of the standby target of the mobile station UE#1 as notified by the server HSS; and the step in which the server AS delivers the incoming signal for voice communication based on the location information for VoIP of the mobile station UE#1 being managed by itself, the CS communication routing number of the mobile station UE#1, and the RAT classification of the standby target of the mobile station UE#1 depending on the received incoming signal for voice communication addressed to the mobile station UE#1.

A second characteristic of this embodiment is summarized in that a mobile communication system configured to deliver an incoming signal for voice communication to a mobile station UE#1 on standby in any of a plurality of classifications of RATs includes a server AS, a server HSS managing the subscriber information of each mobile station UE, and a server PCRF managing the mobile station UE and the RAT classification corresponding to each session between the server AS and a radio access network device, where the server PCRF includes a function configured such that, upon detecting a change to the RAT classification of the standby target of the mobile station UE#1, notification of this intention is given to the server HSS; the server HSS includes function configured such that notification is given to the server AS of the RAT classification of the standby target of the mobile station UE#1 as notified by the server PCRF; and the server AS includes a function configured to manage the RAT classification of the standby target of the mobile station UE#1 as notified by the server HSS, as well as a function configured to deliver an incoming signal for voice communication based on the location information for VoIP of the mobile station UE#1 being managed by itself, the CS communication routing number of the mobile station UE#1, and the RAT classification of the standby target of the mobile station UE#1 depending on the received incoming signal for voice communication addressed to the mobile station UE#1.

A third characteristic of this embodiment is summarized in that a server AS to be used in a mobile communication system configured to deliver an incoming signal for voice communication to a mobile station UE#1 on standby in any of a plurality of classifications of RATs includes a function configured to manage the RAT classification of the standby target of the mobile station UE#1 as notified by the server HSS managing the subscriber information of each mobile station UE, and a function configured to deliver an incoming signal for voice communication based on the location information for VoIP of the mobile station UE#1 being managed by itself, the CS communication routing number of the mobile station UE#1, and the RAT classification of the standby target of the mobile station UE#1 depending on the received incoming signal for voice communication addressed to the mobile station UE#1.

A fourth characteristic of this embodiment is summarized in that a server HSS to be used in a mobile communication system configured to deliver an incoming signal for voice communication to a mobile station UE#1 on standby in any of a plurality of classifications of RATs includes a function configured to notify the server AS delivering the incoming signal for voice communication of the RAT classification of the standby target of the mobile station UE#1 as notified by the server PCRF managing the mobile station UE and the RAT classification corresponding to each session between the server AS and a radio access network device.

A fifth characteristic of this embodiment is summarized in that a server PCRF to be used in a mobile communication system configured to deliver an incoming signal for voice communication to a mobile station UE#1 on standby in any of a plurality of classifications of RATs includes a function configured to manage a mobile station UE and the RAT classification corresponding to each session between the server AS delivering the incoming signal for voice communication and a radio access network device, and a function configured such that, when a change to the RAT classification of the standby target of the mobile station UE#1 is detected, a notification of this intention is given to the server HSS managing the subscriber information of each mobile station UE.

Note that operation of the above described the mobile station UE, the server AS, HSS, PCRF, the core network device EPC, SGSN, the radio access network device RNC/BTC, eNB, AP, BS may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE, the server AS, HSS, PCRF, the core network device EPC, SGSN, the radio access network device RNC/BTC, eNB, AP, BS. Also, the storage medium and the processor may be provided in the mobile station UE, the server AS, HSS, PCRF, the core network device EPC, SGSN, the radio access network device RNC/BTC, eNB, AP, BS as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method for delivering an incoming signal for voice communication to a mobile station on standby in any of a plurality of classifications of radio access networks, the method comprising:
a step in which when a session management server managing a mobile station and the classification of the radio access network corresponding to each session between a delivery server and a radio access network device detects a change to the classification of the radio access network of the standby target of the mobile station, a subscriber information management server managing the subscriber information of each mobile station is notified of this intention;
a step in which the subscriber information management server notifies the delivery server of the classification of the radio access network of the standby target of the mobile station as notified by the session management server; and
a step in which the delivery server manages the classification of the radio access network of the standby target of the mobile station as notified by the subscriber information management server, and a step in which the delivery server delivers the incoming signal for voice communication based on the location information for VoIP of the mobile station managed by itself, the CS communication routing number of the mobile station, and the classification of the radio access network of the standby target of the mobile station, depending on the received incoming signal for voice communication addressed to the mobile station.

2. A mobile communication system configured to deliver an incoming signal for voice communication to a mobile station on standby in any of a plurality of classifications of radio access networks, the system comprising:
a delivery server;
a subscriber information management server configured to manage the subscriber information of each mobile station; and
a session management server configured to manage the mobile station and the classification of the radio access network corresponding to each session between the delivery server and a radio access network device, wherein
the session management server includes:
a function configured such that when a change is detected to the classification of the radio access network of the standby target of the mobile station, the subscriber information management server is notified of this intention,
the subscriber information management server includes:
a function configured such that the delivery server is notified of the classification of the radio access network of the standby target of the mobile station as notified by the session management server,
the delivery server includes:
a function configured to manage the classification of the radio access network of the standby target of the mobile station as notified by the subscriber information management server; and
a function configured such that the incoming signal for voice communication is delivered based on the location information for VoIP of the mobile station managed by itself, the CS communication routing number of the mobile station, and the classification of the radio access network of the standby target of the mobile station, depending on the received incoming signal for voice communication addressed to the mobile station.

3. A delivery server to be used in a mobile communication system configured to deliver an incoming signal for voice communication to a mobile station on standby in any of a plurality of classifications of radio access networks, the server comprising:
a function configured to manage the classification of the radio access network of the standby target of the mobile station as notified by the subscriber information management server managing the subscriber information of each mobile station; and
a function configured to deliver the incoming signal for voice communication based on the location information for VoIP of the mobile station managed by itself, the CS communication routing number of the mobile station, and the classification of the radio access network of the standby target of the mobile station, depending on the received incoming signal for voice communication addressed to the mobile station.

4. A subscriber information management server to be used in a mobile communication system configured to deliver an incoming signal for voice communication to a mobile station on standby in any of a plurality of classifications of radio access networks, the server comprising:
a function configured to manage the subscriber information of each mobile station; and
a function configured to notify the delivery server that is to deliver the incoming signal for voice communication of the classification of the radio access network of the standby target of the mobile station as notified by a session management server managing the mobile station and the classification of the radio access network corresponding to each session between the delivery server and a radio access network device.

5. A session management server to be used in a mobile communication system configured to deliver an incoming signal for voice communication to a mobile station on standby in any of a plurality of classifications of radio access networks, the server comprising:
a function configured to manage a mobile station and the classification of a radio access network corresponding to each session between a delivery server delivering the incoming signal for voice communication and a radio access network device; and
a function configured such that when a change is detected to the classification of the radio access network of the standby target of the mobile station, a subscriber information management server managing the subscriber information of each mobile station is notified of this intention.
